# EUROPEAN PATENT APPLICATION

(11) **EP 3 106 532 A1**
(43) Date of publication of application: **21.12.2016**
(21) Application number: 15749615.9
(22) Date of filing: 12.02.2015
(51) Int. Cl.: C22C 1/02, C22B 11/00, G01N 33/20, C22B 7/00

(54) **HOMOGENIZATION METHOD FOR Cu ALLOY COMPRISING Ru**

(30) Priority: 12.02.2014 JP 2014024668
(71) Applicant: Tanaka Kikinzoku Kogyo K.K., Chiyoda-ku Tokyo 100-6422 (JP); Nippon PGM Co. Ltd., Tokyo 101-0021 (JP); Dowa Metals & Mining Co., Ltd., Tokyo 101-0021 (JP)
(72) Inventor: YAMAGUCHI Katsunori, Morioka-shi Iwate 020-0066 (JP); TAGAWA Ryo, Ichikawa-shi Chiba 272-0013 (JP); SAKAMOTO Hirofumi, Ichikawa-shi Chiba 272-0013 (JP); FUJITA Mitsuharu, Ichikawa-shi Chiba 272-0013 (JP); UEDA Tetsuya, Ichikawa-shi Chiba 272-0013 (JP); ISHIZAKI Keiko, Ichikawa-shi Chiba 272-0013 (JP); KAWASAKI Minoru, Tokyo 101-0021 (JP); HIROSUE Kiyoshi, Tokyo 101-0021 (JP)
(74) Representative: Peguet, Wilfried
(86) International application number: PCT/JP2015/053864
(87) International publication number: WO 2015/122469

(57) **Abstract**

The present invention provides a homogenization method of a Cu alloy containing Ru, which method comprises a step of adding at least one substance selected from the group consisting of Fe, Ni, FeSi, and Si to a Cu alloy containing at least Ru to homogenize Ru that is segregated within the Cu alloy. The homogenization method improves solubility of Ru in a Cu alloy containing Ru and thus accurate measurement of a precious metal content in the Cu alloy can be performed.

## Description

### TECHNICAL FIELD

The present invention relates to a homogenization method of a Cu alloy containing Ru. Moreover, the present invention relates to a measurement method of a metal content in a Cu alloy containing Ru and a recovery method of a metal in a Cu alloy containing Ru.

### BACKGROUND ART

Precious metals such as platinum group elements have been used in broad fields of electronic materials, magnetic recording materials, catalysts for cleaning automobile exhaust gas, electrode catalysts for fuel cells, and the like and are extremely useful resources for which future demand is expected to further increase. However, since the precious metals are rare and expensive metals from an aspect of resources and main producing countries are limited to specific countries, for stably supplying the precious metals, it is essential to recycle them by recovery and purification.

As recovering methods of such precious metals, for example, representative methods are a wet process such as a dissolution method in which metal components are dissolved and recovered using a strong acid and a dry process in which metal components are absorbed in a molten metal and recovered (see Non-Patent Reference 1).

However, in the case where the recovery of precious metals is performed from a waste material such as a used alloy, the precious metals have been used in various fields as described above. Therefore, in any cases where the precious metals are recovered using either process of the wet process and the dry process, it is necessary to construct a suitable method or system in accordance with the nature of each waste material. Therefore, it is necessary to understand the composition of the metals contained in the waste material exactly.

However, for example, in the case where the waste material is a Cu alloy containing Ru, for the reasons that Ru has a property that it is less prone to dissolve in molten Cu (see Non-Patent Reference 2) and Ru easily interacts with other precious metals, there is a problem that Ru and the other precious metals cause segregation in Cu and thus the precious metal content in the Cu alloy cannot be accurately measured. Moreover, in the recovery of metals such as precious metals segregated in Cu, for example, there is a problem that dissolution with an acid in the wet process is difficult.

### CITED REFERENCES

### NON-PATENT REFERENCES

Non-Patent Reference 1: Kikuo Fujiwara, "Recycle of Precious Metals (Kikinzoku no Risaikuru)", Kagaku Kogaku, Vol. 55, No. 1, 21p, 1991, The Society of Chemical Engineers, Japan

Non-Patent Reference 2: Ryo Tagawa, Hidehiro Sekimoto, Toshiko Kon, Katsunori Yamaguchi, "Cu-Ir-Ru Ternary Phase Diagram at 1300°C and 1500°C", 164th Autumn Meeting of The Iron and Steel Institute of Japan.

### SUMMARY OF THE INVENTION

### PROBLEMS TO BE SOLVED BY THE INVENTION

Accordingly, an object of the present invention is to provide a homogenization method of a Cu alloy containing Ru, which method improves solubility of Ru in a Cu alloy containing Ru and makes it possible to measure a precious metal content in the Cu alloy accurately.

Moreover, another object of the present invention is to provide a measurement method of a metal content in a Cu alloy containing Ru, which method improves solubility of Ru in a Cu alloy containing Ru and makes it possible to measure a precious metal content in the Cu alloy accurately.

Furthermore, still another object of the present invention is to provide a recovery method of a metal in a Cu alloy containing Ru, which method improves solubility of Ru in a Cu alloy containing Ru and makes it possible to recover a precious metal in the Cu alloy in a good recovery rate.

### MEANS FOR SOLVING THE PROBLEMS

As a result of extensive studies, the present inventors have found that, by adding a specific substance to a Cu alloy containing at least Ru, solubility of Ru in the Cu alloy can be improved and segregated Ru can be homogenized in the Cu alloy, and thus they have accomplished the present invention.

That is, the present invention is as follows.
1. A homogenization method of a Cu alloy containing Ru, which method comprises a step of adding at least one substance selected from the group consisting of Fe, Ni, FeSi, and Si to a Cu alloy containing at least Ru to homogenize Ru that is segregated in the Cu alloy.
2. The homogenization method as described in 1 above, wherein the Cu alloy further contains precious metal(s).
3. A measurement method of a metal content in a Cu alloy containing Ru, which method comprises a step of adding at least one substance selected from the group consisting of Fe, Ni, FeSi, and Si to a Cu alloy containing at least Ru to homogenize Ru that is segregated in the Cu alloy and a step of measuring a content of a desired metal in the homogenized Cu alloy.
4. The measurement method as described in 3 above, wherein the Cu alloy further contains precious metal(s).
5. A recovery method of a metal in a Cu alloy containing Ru, which method comprises a step of adding at least one substance selected from the group consisting of Fe, Ni, FeSi, and Si to a Cu alloy containing at least Ru to homogenize Ru that is segregated in the Cu alloy and a step of recovering a desired metal from the homogenized Cu alloy.
6. The recovery method as described in 5 above, wherein the Cu alloy further contains precious metal(s).

### EFFECT OF THE INVENTION

According to the homogenization method of the present invention, since at least one substance selected from the group consisting of Fe, Ni, FeSi, and Si is added to a Cu alloy containing at least Ru, the solubility of Ru in the Cu alloy is improved, Ru that is segregated in the Cu alloy is homogenized, and, even in the case where the Cu alloy contains other precious metal(s), homogenization thereof becomes also possible.

Moreover, according to the measurement method of the present invention, since at least one substance selected from the group consisting of Fe, Ni, FeSi, and Si is added to a Cu alloy containing at least Ru, the solubility of Ru in the Cu alloy is improved, Ru that is segregated in the Cu alloy is homogenized, and, even in the case where the Cu alloy contains other precious metal(s), homogenization thereof becomes also possible, so that it is possible to measure a precious metal content in the Cu alloy accurately. As a result, for example, it becomes possible to construct a suitable method or system for recovering precious metals in accordance with the nature of a waste material containing precious metal(s).

Furthermore, according to the recovery method of the present invention, since at least one substance selected from the group consisting of Fe, Ni, FeSi, and Si is added to a Cu alloy containing at least Ru, the solubility of Ru in the Cu alloy is improved, Ru that is segregated in the Cu alloy is homogenized, and, even in the case where the Cu alloy contains other precious metal(s), homogenization thereof becomes also possible. For example, in the case where a precious metal is recovered by a wet process, good liquefaction of the Cu alloy is achieved and the precious metal in the Cu alloy can be recovered in a good recovery rate.

### BRIEF DESCRIPTION OF THE DRAWINGS

FIG. 1 is a figure for explaining outline of the experimental apparatus used in Example.
FIG, 2 is a figure for explaining analysis portions of a sample.
FIGS. 3(a) to 3(c) are figures showing composition images (hereinafter referred to as COMP images) on EPMA at the sample positions shown in FIG. 2 in the case where 20% by mass of Fe was added.
FIGS. 4(a) to 4(c) are figures showing COMP images on EPMA at the sample positions shown in FIG. 2 in the case where 40% by mass of Ni was added and the whole was held at 1500°C.
FIGS. 5(a) to 5(c) are figures showing COMP images on EPMA at the sample positions shown in FIG. 2 in the case where 50% by mass of Sn was added.
FIGS. 6(a) to 6(c) are figures showing COMP images on EPMA at the sample positions shown in FIG. 2 in the case where 20% by mass of FeSi was added and the whole was held at 1500°C.
FIGS. 7(a) to 7(c) are figures showing COMP images on EPMA at the sample positions shown in FIG. 2 in the case where 7.5% by mass of Si was added and the whole was held at 1600°C.
FIGS. 8(a) to 8(c) are figures showing COMP images on EPMA at the sample positions shown in FIG. 2 in the case where 30% by mass of Al was added and the whole was held at 1300°C.

### EMBODIMENTS FOR CARRYING OUT THE INVENTION

The following will explain the present invention in further detail.

First, there will be explained the homogenization method of a Cu alloy containing Ru of the present invention. The Cu alloy for use in the present invention is an alloy containing at least Ru. As disclosed in the above Non-Patent Reference 2 (Ryo Tagawa, Hidehiro Sekimoto, Toshiko Kon, Katsunori Yamaguchi, "Cu-Ir-Ru Ternary Phase Diagram at 1300°C and 1500°C", 164th Autumn Meeting of The Iron and Steel Institute of Japan), Ru has a property that it is less prone to dissolve in Cu and, for example, when Ru is present in Cu in an amount of 0.1% by mass or more, there is observed a phenomenon that Ru is segregated in Cu.

Incidentally, the segregation referred to in the present invention means that Ru concentration varies by 2.0% by mass or more among arbitrary portions of a Cu alloy.

The content of Ru in the Cu alloy to be used in the present invention is, for example, 0.1 to 10% by mass, preferably 0.1 to 5% by mass, and further preferably 1 to 5% by mass based on the whole Cu alloy.

Moreover, as the other elements contained in the Cu alloy to be used in the present invention, for example, there may be mentioned precious metals (Pt, Au, Ag, Pd, Rh, Ir) whose recovery is desired. Of these, platinum group elements (PGM) selected from Pt, Pd, Rh, and Ir are advantageous in view of easy homogenization in a Cu alloy by the application of the present invention. Particularly, in a system containing Ir that is easily segregated in a Cu alloy by Ru, the present invention effectively functions for homogenization, so that it is preferably used.

The content of Cu in the Cu alloy to be used in the present invention is, for example, 20% by mass or more, and preferably 30 to 60% by mass based on the Cu alloy. When the content of Cu is less than 20% by mass, since the effect of the additive substance to be mentioned below is decreased, it is necessary to use a large amount of the additive substance, so that not only the use results in economical loss but also a recovery step thereafter becomes complex and, in the recovery by a wet process and the like, there sometime arises a problem that a time for dissolution at the time of dissolution with an acid increases. When the content of Cu is 20% by mass or more, homogenization and recovery can be appropriately carried out with no occurrence of the problems.

The content of precious metal(s) in the Cu alloy to be used in the present invention is, for example, 80% by mass or less, and preferably 40 to 70% by mass based on the Cu alloy. When the content of the precious metal(s) exceeds 80% by mass, since the effect of the additive substance to be mentioned below is decreased, it is necessary to use a large amount of the additive substance, so that not only the use results in economical loss but also a recovery step thereafter becomes complex and, in the recovery by a wet process and the like, there sometimes arises a problem that a time for dissolution at the time of dissolution with an acid increases. When the content of the precious metal(s) is 80% by mass or less, homogenization and recovery can be appropriately carried out with no occurrence of the problems.

The following will exemplify specific contents of additive substances.

In the homogenization method of the present invention, at least one substance (hereinafter sometimes referred to as additive substance) selected from the group consisting of Fe, Ni, FeSi, and Si is added to a Cu alloy containing at least Ru and thereby, the solubility of Ru in the Cu alloy is improved and it becomes possible to homogenize segregated Ru in the Cu alloy.

The following will describe suitable addition amounts of various additive substances from the viewpoint of the effect of the present invention.

The addition amount of Fe is, for example, 10% by mass or more, preferably 20% by mass or more, further preferably 20 to 500% by mass, and more preferably 20 to 50% by mass based on the Cu alloy.

The addition amount of Ni is, for example, 20% by mass or more, preferably 30% by mass or more, and further preferably 30 to 50% by mass based on the Cu alloy.

The addition amount of FeSi is, for example, 10% by mass or more, preferably 10 to 50% by mass, and further preferably 10 to 20% by mass based on the Cu alloy.

The addition amount of Si is, for example, 5% by mass or more, preferably 5 to 15% by mass, and further preferably 7.5 to 12.5% by mass based on the Cu alloy.

Moreover, as an addition method of the additive substance, it is preferable to adopt a method of adding the additive substance to the Cu alloy by dissolving the additive substance and the Cu alloy in the co-presence of the both.

The following will describe suitable homogenization temperature after the addition of various additive substances from the viewpoint of the effect of the present invention.

The homogenization temperature in the case where Fe has been added is, for example, 1200°C or higher, preferably 1200 to 1700°C, and further preferably 1300 to 1600°C.

The homogenization temperature in the case where Ni has been added is, for example, 1200°C or higher, preferably 1200 to 1700°C, and further preferably 1300 to 1600°C.

The homogenization temperature in the case where FeSi has been added is, for example, 1200°C or higher, preferably 1200 to 1700°C, and further preferably 1300 to 1600°C.

The homogenization temperature in the case where Si has been added is, for example, 1200°C or higher, preferably 1200 to 1700°C, and further preferably 1300 to 1600°C.

Moreover, the holding time at the homogenization temperature after the addition of the additive substance is, for example, 30 minutes or more in all cases. Furthermore, an atmosphere at the holding is not particularly limited but, for example, an inert atmosphere of argon, helium, nitrogen, or the like may be mentioned.

After the addition of the additive substance, a homogeneous Cu alloy is obtained by cooling the Cu alloy, for example, to 1000°C or lower within 1 hour, preferably to 500°C or lower within 10 minutes. A cooling method is not particularly limited but cooling may be performed by blowing with an inert gas such as an argon gas, a helium gas, or a nitrogen gas, air cooling, or water cooling or cooling may be performed by transferring the alloy to a mold that is separately provided.

By the above homogenization method of the present invention, the solubility of Ru in the Cu alloy is improved, Ru that is segregated in the Cu alloy is homogenized, and, even in the case where the Cu alloy contains other precious metal(s), homogenization thereof becomes also possible.

The following will explain the measurement method of a metal content in a Cu alloy containing Ru of the present invention.

The measurement method of the present invention is a method in which the homogenization method of the present invention is applied to the Cu alloy to homogenize segregated Ru in the Cu alloy and subsequently a content of the desired metal in the Cu alloy is measured. As the desired metal, a precious metal, particularly above-described PGM or the like may be mentioned and Pt is especially preferred.

The measurement method of the desired metal may be done following a known method and is not particularly limited. As the known method, for example, there may be mentioned analysis by an equipment such as electron probe microanalyzer (EPMA) or X-ray fluorescence analysis (XRF), a chemical analytical method, or the like.

In the measurement method of the present invention, Ru that is segregated in the Cu alloy is homogenized and the other precious metal(s) in the Cu alloy are also homogenized, so that accurate measurement of a precious metal content in the Cu alloy can be performed. Thereby, it becomes possible to construct a suitable method or system for recovering precious metals in accordance with the nature of a waste material containing precious metal(s).

The following will explain the recovery method of a metal in a Cu alloy containing Ru of the present invention. The recovery method of the present invention is a method in which the homogenization method of the present invention is applied to the Cu alloy to homogenize segregated Ru in the Cu alloy and subsequently a desired metal is recovered from the inside of the Cu alloy.

For example, in the case where the desired metal to be recovered is a precious metal, the recovery may be done on the basis of a conventionally known method and is not particularly limited.

For example, there may be adopted a wet process such as a method of dissolving the Cu alloy with a solution obtained by adding an oxidizing agent to aqua regia or hydrochloric acid and extracting the precious metal, a dry process of melting Cu in a furnace to transfer the precious metal contained in the Cu alloy, or the other method. Of these, in the case of adopting the wet process, for example, good liquefaction of the Cu alloy is achieved in an acid and the precious metal therein can be recovered in a good recovery rate, so that the case is preferred.

### EXAMPLES

The following will further explain the present invention by way of examples but the present invention should not be construed as being limited to the following examples.

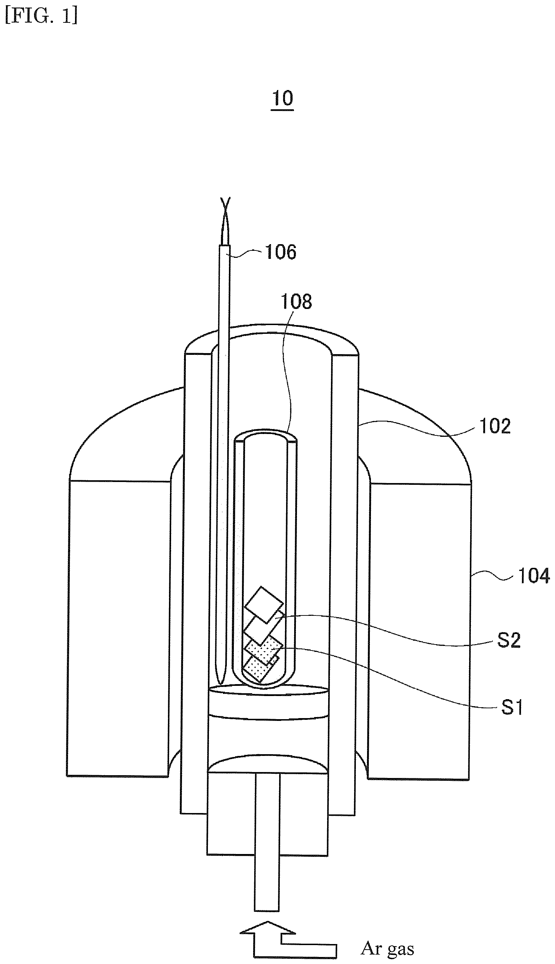

The following experiment was performed for Cu alloys containing 30 to 60% by mass of Cu, 2 to 20% by mass of Ru, and 38 to 68% by mass of precious metals (Pt, Au, Ag, Pd, Rh, Ir). FIG. 1 is a figure for explaining outline of the experimental apparatus used in the present Examples. The experimental apparatus 10 is provided with a reaction tube 102, a heater 104 for heating the reaction tube 102, a thermocouple 106 for measuring inner temperature of the reaction tube 102, and an alumina-made crucible 108 placed inside the reaction tube 102.

Into an alumina-made crucible 108 having an inner diameter of 12 mm and a purity of 99.5% or more, 2 g of the Cu alloy (S1) containing Ru and a predetermined amount of one of various additive substances (S2) having a purity of 99% or more were inserted and, after the whole was held at a temperature higher than objective temperature by 100°C for 1 hour in an argon gas atmosphere (flow rate: 300 cc/minute), the temperature was lowered to the objective temperature and the whole was held under heating for 1 hour to achieve homogenization. Thereafter, the sample was taken out of the furnace and rapidly cooled to 500°C or lower within 10 minutes by blowing with an argon gas. The sample after rapid cooling was allowed to cool until around room temperature and, after it was mirror-polished by buffing using an alumina powder (particle size: 0.3 µm) as a polishing agent, observation of the structure and quantitative analysis of each phase were performed on an optical microscope and EPMA (JEOL Ltd., JXA-8500F), thereby evaluating "homogeneity".

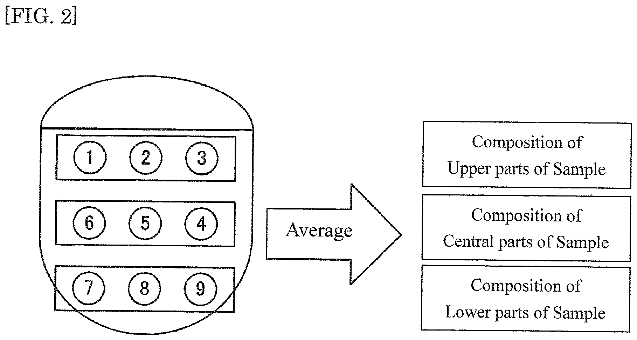

At the analysis on EPMA, as shown in FIG. 2, the sample was divided into three areas and nine portions of upper parts 1 to 3, central parts 4 to 6, and lower parts 7 to 9 in a vertical direction, and average composition of each area was determined in a beam range of 300 µm. Moreover, as required, a solid phase was analyzed at a beam diameter of 1 µm and a liquid phase was analyzed in a range of 100 µm.

The following Table 1 shows addition amounts of various additive substances, objective temperature, and results of EPMA analysis. Incidentally, the "addition amount" shown in Table 1 is an amount based on the Cu alloy (S1). Moreover, the "homogeneity" is evaluated according to the following evaluation criteria.
Good: Variation in Ru content among upper parts, central parts, and lower parts is less than 2.0% by mass in the Cu alloy
Bad: Variation in Ru content among upper parts, central parts, and lower parts is 2.0% by mass or more in the Cu alloy

**[Table 1]**

| Additive substance | Addition amount (% by mass) | Objective temperature (°C) | Heating-holding time (h) | Homogeneity |
|---|---|---|---|---|
| Fe | 20 | 1600 | 1 | Good |
| Fe | 30 | 1600 | 1 | Good |
| Fe | 30 | 1600 | 1 | Good |
| Fe | 50 | 1600 | 1 | Good |
| Ni | 40 | 1500 | 1 | Good |
| Ni | 50 | 1500 | 1 | Good |
| Ni | 30 | 1600 | 1 | Good |
| Sn | 10 | 1500 | 1 | Bad |
| Sn | 30 | 1500 | 1 | Bad |
| Sn | 50 | 1500 | 1 | Bad |
| FeSi | 12.5 | 1600 | 1 | Good |
| FeSi | 20 | 1500 | 1 | Good |
| Si | 7.5 | 1600 | 1 | Good |
| Al | 30 | 1300 | 1 | Bad |

From the results in Table 1, the following facts were revealed.

### (1) Addition of Fe (electrolytic iron)

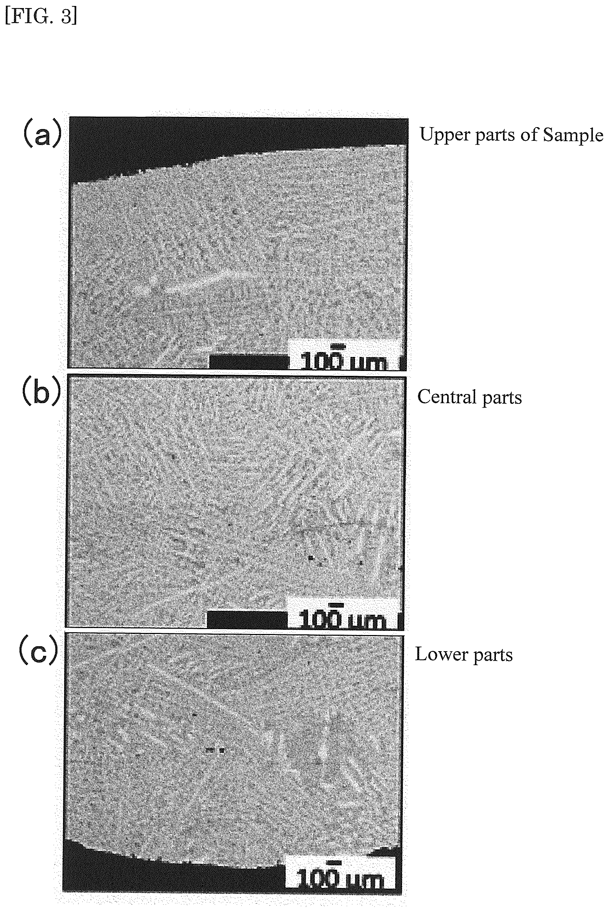

In the case where 20 to 50% by mass of Fe (electrolytic iron powder) was added as an additive substance and the whole was held at 1600°C for 1 hour, it was possible to confirm homogenization of Ru. FIGS. 3(a) to 3(c) are figures showing COMP images on EPMA at the sample positions shown in FIG. 2 in the case where 20% by mass of Fe was added.

In FIGS. 3(a) to 3(c), in the sample where 20% by mass of Fe was added, segregation of solid phases is not observed at the lower parts of the sample and no difference in each element concentration among the sample positions is observed, so that it is understood that the alloy becomes a homogeneous alloy.

### (2) Addition of Ni

In the case where 30 to 50% by mass of an Ni powder was added as an additive substance and the whole was held at 1500°C or 1600°C for 1 hour, it was possible to confirm homogenization of Ru.

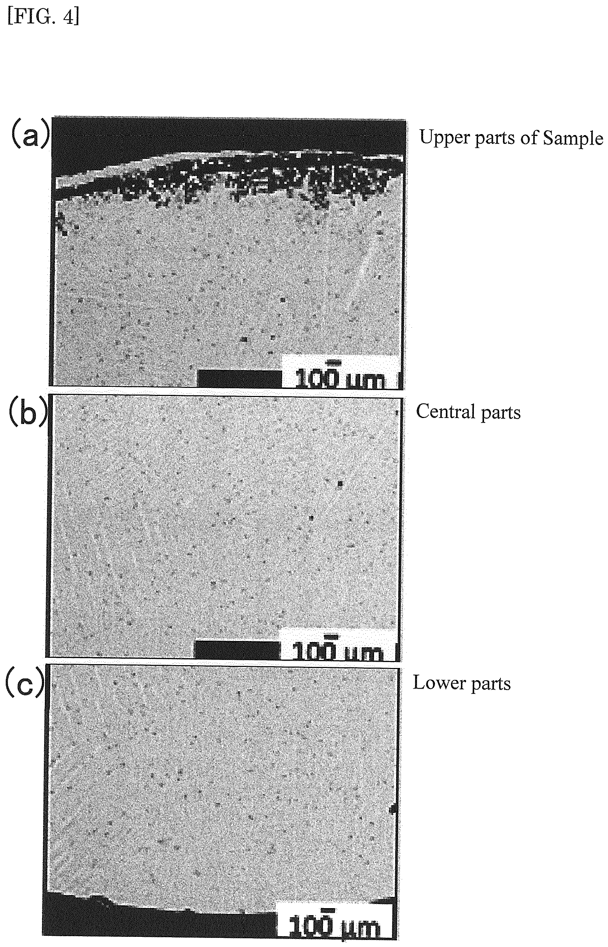

FIGS. 4(a) to 4(c) are figures showing COMP images on EPMA at the sample positions shown in FIG. 2 in the case where 40% by mass of Ni was added and the whole was held at 1500°C.

In FIGS. 4(a) to 4(c), in the sample where 40% by mass of Ni was added, no solid phase is observed at the lower parts of the sample and no segregation among the sample positions is observed, so that it is understood that the alloy becomes a homogeneous alloy.

### (3) Addition of Sn

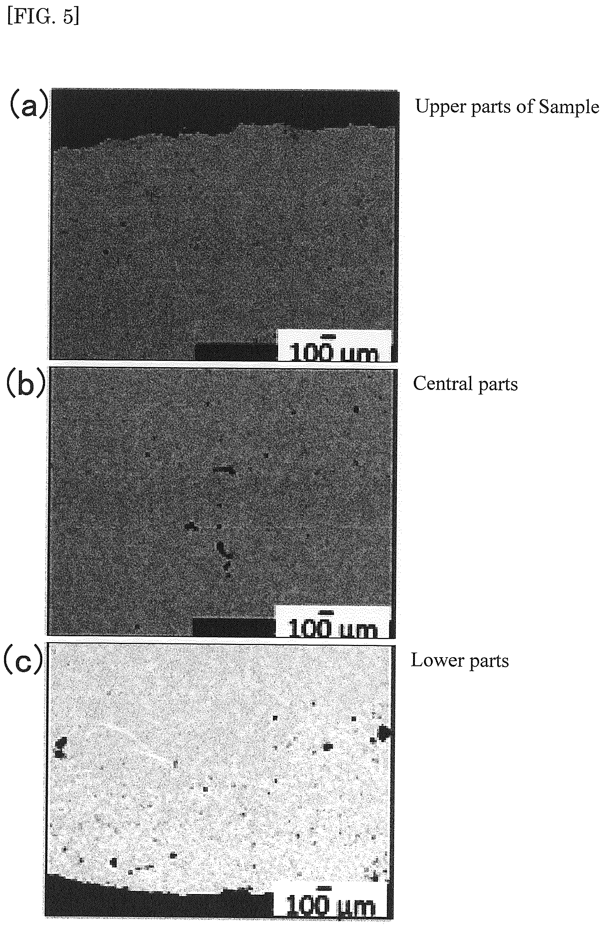

In the case where 10 to 50% by mass of metal Sn was added as a comparative additive substance and the whole was held at 1500°C for 1 hour, it was not possible to homogenize the alloy in all samples. FIGS. 5(a) to 5(c) are figures showing COMP images on EPMA at the sample positions shown in FIG. 2 in the case where 50% by mass of Sn was added.

In FIGS. 5(a) to 5(c), the concentration of ruthenium was high at the lower parts of the sample and solid phases were confirmed. The solid phases were similarly observed also in the samples containing 10% by mass and 30% by mass and thus it was understood that homogeneous alloys were not obtained.

### (4) Addition of FeSi

In the case where 12.5 to 20% by mass of FeSi was added as an additive substance and the whole was held at 1500°C or 1600°C for 1 hour, it was possible to confirm homogenization of Ru.

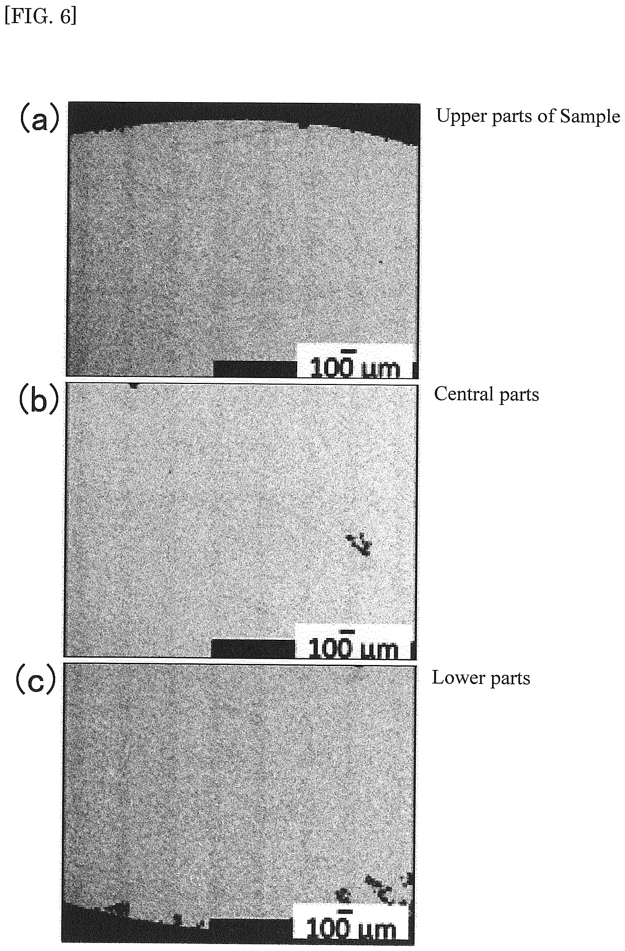

FIGS. 6(a) to 6(c) are figures showing COMP images on EPMA at the sample positions shown in FIG. 2 in the case where 20% by mass of FeSi was added and the whole was held at 1500°C. In FIGS. 6(a) to 6(c), solid phases are not observed at the lower parts of the sample and no segregation among the sample positions is observed, so that it is understood that the alloy becomes a homogeneous alloy.

### (5) Addition of Si

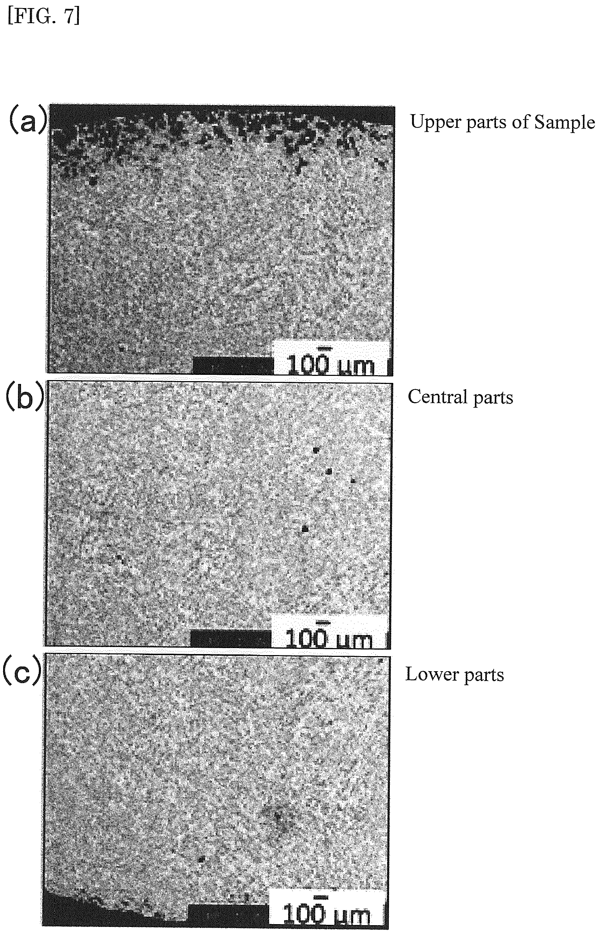

In the case where 7.5% by mass of Si was added as an additive substance and the whole was held at 1600°C for 1 hour, it was possible to confirm homogenization of Ru. FIGS. 7(a) to 7(c) are figures showing COMP images on EPMA at the sample positions shown in FIG. 2 in the case where 7.5% by mass of Si was added and the whole was held at 1600°C. In FIGS. 7(a) to 7(c), solid phases are not observed at the lower parts of the sample and no segregation among the sample positions is observed, so that it is understood that the alloy becomes a homogeneous alloy.

### (6) Addition of Al

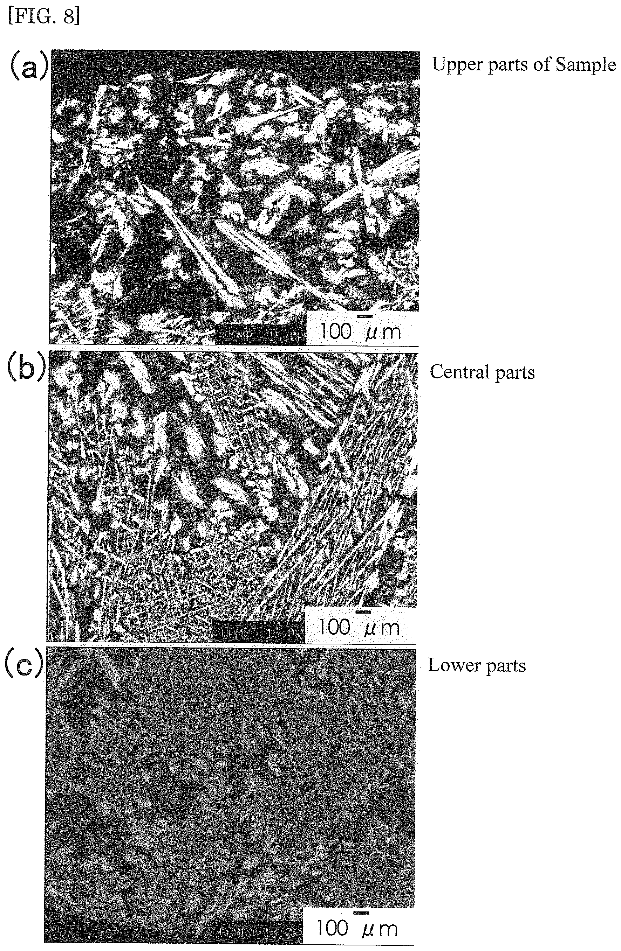

In the case where 30% by mass of Al was added as a comparative additive substance and the whole was held at 1300°C for 1 hour, it was not possible to homogenize the Cu alloy. FIGS. 8(a) to 8(c) are figures showing COMP images on EPMA at the sample positions shown in FIG. 2 in the case where 30% by mass of Al was added and the whole was held at 1300°C. In FIGS. 8(a) to 8(c), it is understood that a homogeneous alloy is not obtained.

A homogeneous molten solid of Example obtained by homogenization with the addition of 12.5% by mass of FeSi was dissolved with aqua regia whose volume was ten times the volume of the solid to form a liquid containing Cu, Ru, Fe, Si, and precious metals (Pt, Au, Ag, Pd, Rh, Ir). A liquefaction rate of the homogeneous molten solid was 93%, which was a high dissolution rate. The liquefied ruthenium and the precious metals were separated into ruthenium and respective components of the precious metals by a usual method such as solvent extraction, solid-liquid separation by reduction, or separation by electrolysis or with an adsorbing agent, and they were recovered.

While the present invention has been described in detail and with reference to specific embodiments thereof, it will be apparent to one skilled in the art that various changes and modifications can be made therein without departing from the spirit and scope thereof.

Incidentally, the present application is based on Japanese Patent Application No. 2014-024668 filed on February 12, 2014, and the contents are incorporated herein by reference.

### DESCRIPTION OF REFERENCE NUMERALS AND SIGNS

- 102: Reaction tube
- 104: Heater for heating reaction tube
- 106: Thermocouple
- 108: Alumina-made crucible
- S1: Cu alloy containing Ru
- S2: Additive substance

## Claims

1. A homogenization method of a Cu alloy containing Ru, which method comprises a step of adding at least one substance selected from the group consisting of Fe, Ni, FeSi, and Si to a Cu alloy containing at least Ru to homogenize Ru that is segregated in the Cu alloy.

2. The homogenization method according to claim 1, wherein the Cu alloy further contains precious metal(s).

3. A measurement method of a metal content in a Cu alloy containing Ru, which method comprises a step of adding at least one substance selected from the group consisting of Fe, Ni, FeSi, and Si to a Cu alloy containing at least Ru to homogenize Ru that is segregated in the Cu alloy and a step of measuring a content of a desired metal in the homogenized Cu alloy.

4. The measurement method according to claim 3, wherein the Cu alloy further contains precious metal(s).

5. A recovery method of a metal in a Cu alloy containing Ru, which method comprises a step of adding at least one substance selected from the group consisting of Fe, Ni, FeSi, and Si to a Cu alloy containing at least Ru to homogenize Ru that is segregated in the Cu alloy and a step of recovering a desired metal from the homogenized Cu alloy.

6. The recovery method according to claim 5, wherein the Cu alloy further contains precious metal(s).
